# FASCICULE DE BREVET EUROPEEN

(11) **EP 0 521 760 B1**
(45) Date de publication et mention de la délivrance du brevet: **15.03.1995**
(21) Numéro de dépôt: 92401831.0
(22) Date de dépôt: 29.06.1992
(51) Int. Cl.: B64C 27/59, B64C 13/28, G05G 5/22

(54) **Dispositif pour le réglage des efforts de manoeuvre d'organes mobiles d'aéronef**
Vorrichtung zur Einstellung des Arbeitseffekts der Steuerorgane eines Luftfahrzeuges
Device to adjust the operating effort of aircraft control members

(30) Priorité: 03.07.1991 FR 9108313
(43) Date de publication de la demande: 07.01.1993
(73) Titulaire: EUROCOPTER FRANCE, F-13725 Marignane Cédex (FR)
(72) Inventeur: Guimbal, Bruno, F-13290 Les Milles (FR)
(74) Mandataire: Bonnetat, Christian

(56) Documents cités:
- FR-A- 546 276
- FR-A- 764 635
- FR-A- 910 689
- US-A- 2 856 788

## Description

La présente invention concerne un dispositif unique pour le réglage des efforts de manoeuvre d'organes mobiles d'aéronef par une pièce de commande agissant sur deux chaînes ou liaisons de commande linéaires indépendantes.

Quoique non exclusivement, le dispositif selon l'invention est plus particulièrement destiné à la commande du plateau cyclique d'un rotor d'hélicoptère. Dans ce cas, les organes mobiles correspondent alors à des biellettes de commande, des vérins ou analogues, qui sont reliés au plateau cyclique et qui permettent d'obtenir, de façon connue et en fonction des déplacements imposés par le pilote au dispositif, en agissant sur un manche dit cyclique, l'inclinaison du plateau cyclique autour de deux axes perpendiculaires, laquelle inclinaison du plateau cyclique commande alors le basculement de l'assiette du rotor suivant le déplacement angulaire du manche par le pilote.

Toutefois, le dispositif pourrait également s'appliquer à la commande de surfaces aérodynamiques d'un avion. Dans ce cas, les organes mobiles correspondent par exemple aux gouvernes de profondeur et de gauchissement pivotant autour d'axes transversaux, et qui sont commandés de façon coordonnée par un manche à balai ou un "volant à cornes" disposé à l'extrémité supérieure d'un levier se déplaçant longitudinalement.

On connaît déjà de nombreux dispositifs pour la commande d'organes mobiles d'aéronef, tels que celui enseigné par le brevet français FR-764 635 et appliqué à la commande de l'inclinaison d'un rotor.

Généralement, les dispositifs connus comportent un manche de commande pivotant auquel sont articulés un arbre et une bielle. Sous l'action d'un déplacement angulaire du manche dans un premier plan, l'arbre peut pivoter autour de son axe et entraîner, par l'intermédiaire d'une première liaison, le déplacement d'au moins un premier organe mobile. Par analogie, sous l'action d'un déplacement angulaire du manche dans un second plan, la bielle peut être déplacée en translation parallèle à son axe longitudinal et entraîner, par l'intermédiaire d'une seconde liaison, le déplacement d'au moins un second organe mobile.

Ainsi, dans l'application préférentielle du dispositif à la commande du plateau cyclique du rotor d'un hélicoptère, on sait que le déplacement du premier organe articulé au plateau cyclique entraîne le pivotement dudit plateau autour d'un axe choisi de telle sorte que, compte tenu de l'effet de précession gyroscopique, ce pivotement du plateau cyclique provoque une inclinaison vers l'avant ou vers l'arrière du disque rotor, selon le sens du déplacement angulaire du manche cyclique dans le premier plan défini par l'axe de roulis et l'axe de lacet dudit hélicoptère. Quant à l'inclinaison latérale du disque rotor parallèlement à l'axe de roulis de l'hélicoptère, il est obtenu par le déplacement opposé de deux organes mobiles, reliés au plateau et disposés respectivement symétriquement, de façon diamétralement opposée, de part et d'autre de l'axe qui correspond au basculement longitudinal du disque rotor. Le déplacement angulaire du manche cyclique dans le second plan, défini par les axes de tangage et de lacet, provoque alors le basculement du rotor à droite ou à gauche selon le sens du déplacement angulaire du manche. Ces déplacements angulaires du manche vers l'avant ou vers l'arrière et vers la droite ou vers la gauche peuvent être combinés de façon à permettre tous les basculements possibles du rotor selon les conditions de vol demandées à l'hélicoptère.

Aussi, ces dispositifs de commande sont également pourvus de moyens de friction qui permettent d'une part au pilote de doser son effort lors des déplacements angulaires du manche cyclique, et, d'autre part, d'assurer un freinage réglable des déplacements angulaires du manche sous les efforts en provenance du plateau cyclique, en particulier pour filtrer les efforts dynamiques qui parviennent au pilote, améliorant de la sorte le confort et la précision du pilotage.

Dans une première réalisation, telle que décrite dans le brevet FR-764 635 et utilisée par exemple sur de nombreux hélicoptères légers, les moyens de friction comprennent deux mécanismes indépendants à molette réglable coopérant avec une glissière, le serrage de la molette contre la glissière déterminant la friction souhaitée par le pilote entre celles-ci. Un des deux mécanismes est prévu pour le déplacement angulaire du manche pivotant dans le premier plan, tandis que l'autre mécanisme est prévu pour le déplacement angulaire du manche pivotant dans le second plan. Si cette première réalisation des moyens de friction est mécaniquement simple et offre une possibilité de réglages indépendants entre les deux mécanismes, en revanche, elle implique de nombreux inconvénients. Tout d'abord, le pilote est dans l'obligation de régler les deux molettes pour adapter la friction selon ses souhaits. En outre, ces moyens de friction procurent un pilotage désagréable et peu précis. En effet, l'effort à vaincre pour un déplacement quelconque du manche cyclique combinant un déplacement angulaire dans les deux plans (c'est-à-dire à chaque instant) est égal à la somme de l'effort longitudinal et de l'effort latéral à fournir. De plus, la direction de cet effort combiné n'est jamais alignée avec celle du mouvement, ce qui, outre le caractère peu ergonomique du geste fourni par le pilote, se traduit, sur les hélicoptères équipés de ces moyens de friction, par l'impossibilité de réaliser des trajectoires courbes rigoureuses lesquelles sont alors effectuées de façon "saccadée", en suivant au mieux lesdites trajectoires courbes à exécuter.

Dans une seconde réalisation, les moyens de friction des dispositifs de commande utilisent une rotule hémisphérique à la base du manche cyclique, servant au pivotement du manche, pour obtenir la friction souhaitée selon le déplacement du manche. Pour cela, la rotule comprend une coupelle de friction fixe solidaire du plancher et traversée par le manche, et une coupelle de friction liée au manche et s'appliquant contre la coupelle fixe. Un bouton moleté, entourant le manche, autorise le réglage de la friction entre les deux coupelles.

Ainsi, grâce à ces moyens de friction à rotule, le réglage de la friction du manche est obtenu par un unique bouton, et l'effort à fournir par le pilote est alors tangent au mouvement imposé par le pilote, supprimant les inconvénients précités.

Néanmoins, ces moyens de friction à rotule font apparaître d'autres inconvénients. Tout d'abord, il ressort que la réalisation est mécaniquement compliquée et délicate. En outre, à cause du passage axial du manche dans les coupelles hémisphériques, la friction n'est pas symétrique lors d'un quelconque déplacement du manche. Par ailleurs, comme la rotule est située au voisinage du plancher de l'hélicoptère, elle s'encrasse rapidement et le bouton de réglage des moyens de friction, qui est accessible au pilote, devient alors pratiquement inaccessible pour le copilote. Il faut alors en installer un autre sur la partie inférieure du manche copilote, mais alors le réglage simultané des deux dispositifs par le pilote et par le copilote est malaisé. De plus, l'effort à fournir par le pilote pour un déplacement longitudinal du manche (vers l'avant ou vers l'arrière) est le même que celui qu'il doit fournir pour un déplacement latéral (vers la droite ou vers la gauche), ce qui est peu ergonomique. En effet, il est plus facile à un pilote d'exercer un effort longitudinal plus élevé vers l'avant ou vers l'arrière, qu'un effort latéral vers la gauche ou vers la droite.

La présente invention a pour but de remédier aux inconvénients inhérents aux différentes réalisations des moyens de friction utilisés dans les dispositifs de commande actuels.

A cet effet, le dispositif pour le réglage des efforts de manoeuvre d'organes mobiles d'aéronef, du type comportant :
- au moins un manche de commande pivotant ;
- un arbre articulé audit manche et pouvant pivoter autour de son axe sous l'action d'un déplacement angulaire du manche dans un premier plan ;
- une première liaison prévue entre ledit arbre et au moins un premier organe mobile, et entraînant le déplacement de ce dernier ;
- une bielle articulée audit manche et pouvant être déplacée en translation parallèle à son axe longitudinal sous l'action d'un déplacement angulaire du manche dans un second plan ;
- une seconde liaison prévue entre ladite bielle et au moins un second organe mobile, et entraînant le déplacement de ce dernier ; et
- des moyens de friction pour doser les déplacements angulaires du manche dans les deux plans, et assurer un freinage réglable des déplacements du manche sous les efforts en provenance des premier et second organes mobiles, est remarquable, selon l'invention, en ce que lesdits moyens de friction sont agencés entre lesdites première et seconde liaisons et comprennent au moins deux éléments de friction, associés respectivement à la première et à la seconde liaison, et des moyens de serrage réglables par une commande unique appliquant les deux éléments de friction l'un contre l'autre.

Ainsi, grâce à l'invention, les moyens de friction sont avantageusement et uniquement prévus entre les première et seconde liaisons, qui ont un point commun par l'intermédiaire desdits éléments de friction. Il en résulte une réalisation structurelle simple et peu coûteuse du dispositif de commande, ainsi qu'un réglage unique et aisé de la friction entre les deux éléments en agissant pour cela sur les moyens de serrage par une seule commande. Le dispositif selon l'invention s'affranchit ainsi des inconvénients liés aux moyens de friction antérieurs.

Dans l'application du dispositif à la commande du plateau cyclique d'un hélicoptère, le pilote règle alors directement la friction du manche, aussi bien pour les déplacements angulaires dans le premier plan que dans le second plan, en actionnant les moyens de serrage, lesquels déplacements angulaires engendrent, via les organes respectifs, le pivotement du plateau cyclique autour des deux axes perpendiculaires. Le déplacement angulaire du manche dans le premier plan sollicite alors la friction en translation de l'un des éléments sur l'autre, tandis que le déplacement du manche dans le second plan, perpendiculaire, sollicite la friction en rotation de l'autre des éléments.

De préférence, lesdits éléments de friction, associés respectivement à la première et à la seconde liaisons, sont proches dudit arbre et de ladite bielle auxquels le manche pivotant est articulé. Ainsi, les moyens de serrage desdits moyens de friction sont-ils accessibles aisément par le pilote, puisqu'ils sont alors à proximité du manche.

Dans le cas d'une double commande, lesdits moyens de serrage sont de préférence situés entre le pilote et le copilote sensiblement dans l'axe de symétrie de l'hélicoptère pour pouvoir être manoeuvrés par l'un ou par l'autre selon les besoins.

Plus particulièrement, l'un des éléments de friction est pourvu d'une garniture de friction, tandis que l'autre élément de friction est alors revêtu d'une matière ayant une dureté superficielle élevée, les moyens de serrage autorisant le réglage de la pression entre ladite garniture et ladite matière. Dans ce cas, ladite garniture de friction peut être réalisée en un polytétrafluoroéthylène et se présenter sous la forme d'un disque rapporté audit élément. Ladite matière revêtant l'élément de friction correspondant peut être réalisée, quant à elle, en une matière métallique durcie superficiellement, par exemple en alliage léger avec oxydation anodique à base de chrome. Ce choix de revêtement et de garniture pour les éléments de friction procure un pilotage très confortable et une usure quasi-nulle.

Dans une réalisation préférée des moyens de friction, l'un des éléments de friction se présente sous la forme d'une pièce plane coulissant dans une pièce en forme de pince définissant l'autre élément de friction. Dans ce cas, les faces opposées de la pièce plane coulissent respectivement sur des garnitures de friction coaxiales sous forme de disque, fixées sur les faces internes de la pièce en forme de pince et frottant sur les faces correspondantes de la pièce plane. On note ainsi la simplicité et la symétrie de réalisation des surfaces de friction, ainsi que la pression constante exercée par celles-ci sous l'action des moyens de serrage. Ces derniers peuvent comprendre une tige filetée, traversant perpendiculairement les éléments de friction associés aux première et seconde liaisons, et un bouton de serrage, monté sur la tige et autorisant le réglage de la friction entre lesdits éléments.

Selon une autre caractéristique avantageuse du dispositif, des moyens moteurs peuvent être couplés auxdits moyens de serrage, permettant au pilote ou au copilote de pouvoir régler la pression entre les deux éléments par une commande unique, par exemple, placée directement sur leur manche cyclique.

Par ailleurs, on sait que les dispositifs de commande, notamment du plateau cyclique des hélicoptères, sont généralement du type dans lequel, par rapport aux axes de roulis 0x, de tangage 0y et de lacet 0z :
- ledit manche peut pivoter autour d'un centre de pivot, dans un premier plan longitudinal x0z et dans un second plan latéral y0z ;
- ledit arbre rotatif est disposé selon l'axe 0y ;
- la première liaison comporte une barre articulée sur l'arbre rotatif parallèlement à ce dernier et susceptible, sous l'action d'un déplacement angulaire du manche dans ledit premier plan, de se déplacer longitudinalement ; et
- la seconde liaison comporte un palonnier articulé à ladite bielle et susceptible, sous l'action du déplacement angulaire du manche dans ledit second plan, de pivoter dans son plan autour d'un axe z-z parallèle à l'axe 0z.

Dans ce cas, on prévoit un coulisseau sur la première liaison entre ledit arbre et ladite barre, et lesdits éléments de friction correspondent respectivement audit coulisseau et audit palonnier desdites première et seconde liaisons, lesdits moyens de serrage traversant perpendiculairement suivant l'axe z-z ledit coulisseau et ledit palonnier en les pressant l'un contre l'autre.

Ainsi, on utilise avantageusement des pièces appartenant auxdites première et seconde liaisons comme éléments de friction.

Plus particulièrement, ladite tige desdits moyens de serrage s'engage alors d'une part, dans un perçage prévu dans ledit palonnier et, d'autre part, dans un trou oblong prévu longitudinalement dans ledit coulisseau. Par conséquent, un déplacement angulaire du manche dans le premier plan se traduit, par l'intermédiaire de l'arbre rotatif, par un déplacement longitudinal du coulisseau et, donc, de la première liaison, grâce à la présence du trou oblong. Un déplacement angulaire du manche dans le second plan se traduit alors, par l'intermédiaire de la bielle, par un pivotement du palonnier monté libre en rotation autour de la tige des moyens de serrage et, donc, un déplacement de la seconde liaison.

Dans un mode préféré de réalisation, ledit palonnier présente une forme de pince entre les faces opposées de laquelle est agencé ledit coulisseau, et il comporte,dans cette réalisation, deux disques de friction respectivement fixés aux faces opposées du palonnier et s'appliquent, en fonction du réglage des moyens de serrage, contre les faces correspondantes du coulisseau.

En outre, lesdits moyens de serrage, associant l'un à l'autre le coulisseau et le palonnier, sont montés coulissant le long de l'axe z-z dans des paliers liés à la structure dudit aéronef, l'ensemble, formé par les moyens de friction et constitué par les moyens de serrage, le palonnier et le coulisseau, étant susceptible de coulisser axialement entre une position haute, pour laquelle le manche est dans une position neutre au moins dans le premier plan x0z, et une position basse pour laquelle le déplacement angulaire du manche dans ledit premier plan est maximal.

Cet agencement est rendu nécessaire du fait que l'articulation du coulisseau à l'arbre est décalée parallèlement de celui-ci, comme pour un mécanisme bielle-manivelle. Dans la position neutre du manche, dans le premier plan x0z, l'articulation est à un point haut d'une trajectoire circulaire ayant pour centre l'axe de l'arbre, et elle peut ainsi, lors de la rotation de l'arbre, suivre la trajectoire en s'abaissant par rapport au point haut, de sorte que ledit ensemble est entraîné vers une position basse.

Les figures du dessin annexé feront bien comprendre comment l'invention peut être réalisée. Sur ces figures, des références identiques désignent des éléments semblables.

La figure 1 est une vue en perspective schématique du dispositif selon l'invention destiné, dans son application préférentielle, à la commande du plateau cyclique du rotor d'un hélicoptère.

La figure 2 illustre en perspective schématique, partiellement éclatée, la partie amont du dispositif de l'invention, montrant notamment un exemple préféré de réalisation des moyens de friction.

La figure 3 est une coupe longitudinale de la partie amont dudit dispositif illustré sur la figure 2 et représentant le montage desdits moyens de friction.

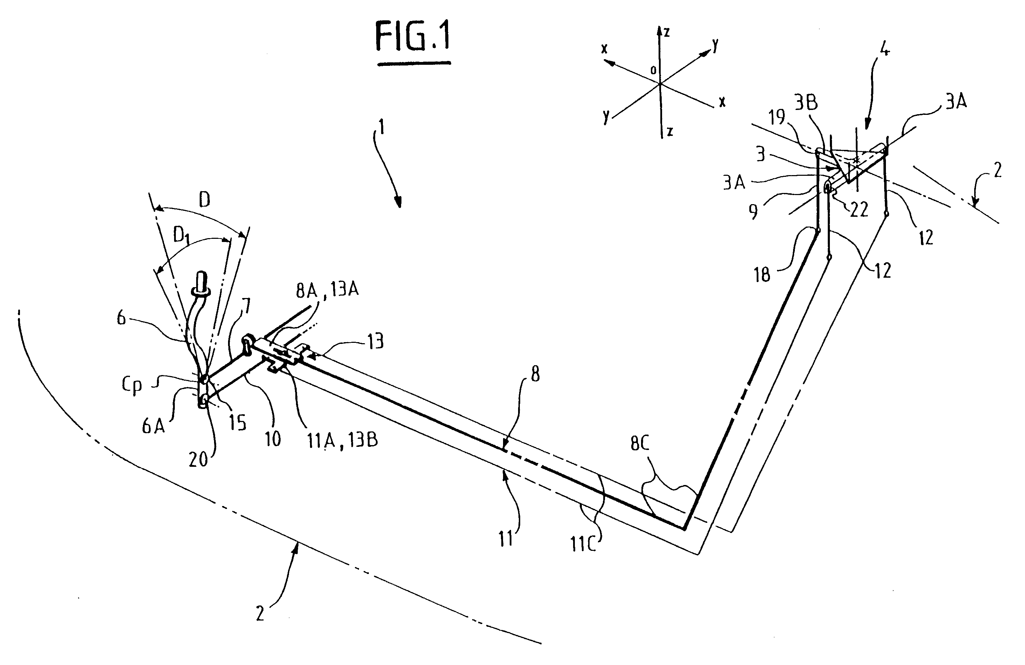

Le dispositif 1, représenté sur la figure 1, est monté, dans son application préférentielle, à bord d'un hélicoptère 2 pour commander l'inclinaison du plateau cyclique 3 du rotor 4 de l'hélicoptère. Aussi, on a représenté les deux axes de pivotement perpendiculaires respectivement 3A et3B, autour desquels peut s'orienter le plateau cyclique 3 sous l'action du dispositif 1. Par rapport au repère orthonormé 0x, 0y, 0z lié à l'hélicoptère, l'axe de pivotement 3A du plateau cyclique est décalé par rapport à l'axe de tangage Oy de l'hélicoptère, de l'angle nécessaire pour compenser l'effet de précession gyroscopique, alors que l'axe de pivotement 3B dudit plateau est perpendiculaire à l'axe de pivotement 3A et décalé par rapport à l'axe de roulis Ox de la même valeur angulaire que l'axe 3A par rapport à l'axe de tangage Oy.

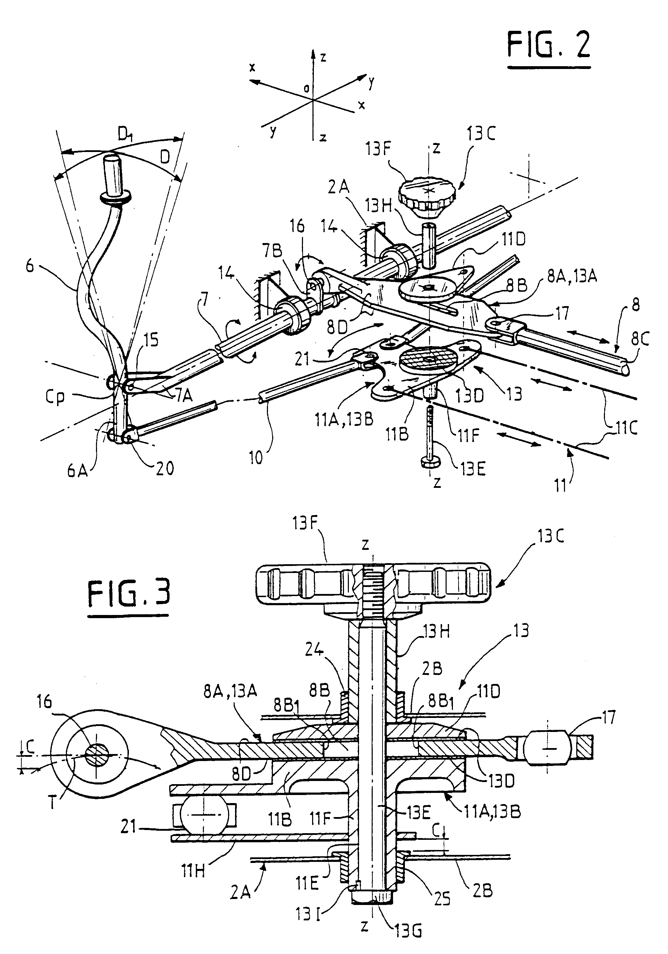

Comme le montrent les figures 1 et 2, le dispositif 1 comprend un manche de commande 6 ou manche cyclique, actionnable par le pilote. Ce manche cyclique 6 est susceptible d'être déplacé angulairement autour d'un centre de pivot Cp d'une part, en roulis, dans un plan xOz et d'autre part, en tangage, dans un plan yOz. Ainsi, de façon connue, le déplacement angulaire D du manche cyclique 6 dans le plan longitudinal xOz se traduit par le pivotement du plateau cyclique 3 autour de l'axe 3A, décalé par rapport à l'axe latéral Oy de l'hélicoptère, et donc, par le basculement du disque rotor vers l'avant ou vers l'arrière de l'hélicoptère selon le sens du déplacement du manche cyclique 6, et la création d'une composante de propulsion de l'hélicoptère dans le sens de l'inclinaison du disque rotor.

De façon analogue, le déplacement angulaire D1 de ce dernier dans le plan latéral yOz se traduit par le pivotement du plateau cyclique 6 autour de l'axe 3B perpendiculaire à l'axe 3A, et donc, par une inclinaison du disque rotor, selon le sens du déplacement du manche cyclique 6, et par un déplacement latéral de l'hélicoptère dans le sens de l'inclinaison du disque rotor, vers la gauche ou vers la droite.

Pour obtenir le pivotement du plateau cyclique autour de ces deux axes 3A et 3B afin de diriger l'hélicoptère selon la trajectoire souhaitée, le dispositif 1 comprend, pour la commande du pivotement autour de l'axe 3A, un arbre rotatif 7, une première liaison 8, et un organe déplaçable 9 relié audit plateau 3, et, pour la commande du pivotement autour de l'axe 3B, une bielle 10, une seconde liaison 11, et deux organes identiques 12 reliés audit plateau, respectivement disposés de part et d'autre de l'axe 3B. Aussi, pour que le pivotement du manche cyclique par le pilote s'effectue dans de bonnes conditions, le dispositif 1 comprend des moyens de friction 13 permettant au pilote de doser les efforts à effectuer sur le manche, selon ses souhaits, et simultanément filtrant les efforts dynamiques transmis en retour par le plateau cyclique. Grâce à ces moyens 13, le pilote ne ressent pas les vibrations transmises par le plateau cyclique.

Plus particulièrement, l'arbre 7 est agencé, dans ce mode de réalisation, selon l'axe Oy du repère et il est porté, par exemple, par deux paliers à billes 14 liés à la structure 2A de l'hélicoptère. L'arbre 7 est articulé, à l'une de ses extrémités 7A au manche cyclique 6 par un tourillon 15, parallèle à l'axe 0x et dont l'intersection' de son axe géométrique avec celui du manche définit le centre de pivot Cp dudit manche.

Bien qu'il ne soit pas représenté sur les figures, un manche cyclique, analogue à celui illustré, pourrait être prévu à l'autre extrémité de l'arbre 7 pour un copilote, par exemple pour la fonction d'instruction au pilotage en vol.

La première liaison 8 comprend avantageusement un coulisseau 8A, formé d'une pièce plate contenue dans le plan x0y et pourvue d'un trou oblong 8B suivant l'axe 0x. Le coulisseau 8A est articulé d'une part, en 16 à l'arbre 7, par un maneton décalé parallèlement de l'arbre 7 et porté par deux flasques 7B prévus sur l'arbre, et d'autre part, en 17 à une extrémité d'une série de bielles et de mécanismes 8C dont l'autre extrémité aboutit, en regard de la figure 1, par une articulation 18, audit organe de commande 9. Ce dernier est alors relié par une articulation appropriée 19 à la périphérie du plateau cyclique 3.

On comprend donc que le déplacement angulaire D du manche cyclique 6 dans le plan longitudinal x0z, autour d'un axe parallèle à l'axe de tangage, se traduit par une rotation de l'arbre 7, puis par un déplacement en translation de la première liaison 8, jusqu'à un déplacement de l'organe de manoeuvre 9 grâce auquel le plateau cyclique 3 peut pivoter autour de l'axe 3A, et faire basculer le plan du disque rotor vers l'avant ou vers l'arrière selon le sens de pivotement du manche 6.

Par ailleurs, la bielle 10 est articulée autour d'une rotule 20, à la base 6A du manche cyclique et autour d'un axe 21 à un palonnier 11A de la seconde liaison 11. Ce palonnier 11A comprend une plaque 11B disposée parallèlement au coulisseau plat 8A, sous celui-ci, et il est monté rotatif autour d'un axe z-z, parallèle à l'axe Oz, comme on le verra ultérieurement. Aussi, le palonnier 11A est relié à une série de bielles et de mécanismes 11C, qui ne sont pas représentés en détail et qui transmettent le mouvement rotatif du palonnier 11A aux organes 12. Ces derniers sont articulés en 22 sur la périphérie du plateau cyclique 3.

On comprend donc que le déplacement angulaire D1 du manche 6, autour de son centre de pivot Cp et dans le plan latéral y0z, se traduit par une translation de la bielle 10, laquelle entraîne la rotation du palonnier 11A autour de son axe, ce qui provoque, via les bielles et les mécanismes 11C, le pivotement du plateau cyclique 3 autour de son axe 3B, et le basculement du disque rotor vers la droite ou vers la gauche de l'hélicoptère, selon le sens du déplacement du manche 6.

On voit sur les figures 1 et 2 qu'une partie de l'autre bielle disposée symétriquement à la bielle 10 par rapport au plan x0z est destinée à être reliée à la base du manche cyclique du copilote.

Les moyens de friction 13 du dispositif 1 sont, selon l'invention, agencés avantageusement entre les première et seconde liaisons 8 et 11 et ils comprennent deux éléments de friction 13A et 13B, associés respectivement aux liaisons 8 et 11, et des moyens de serrage réglables 13C disposés perpendiculairement à ces éléments de friction pour les presser l'un contre l'autre.

Dans le mode de réalisation illustré sur les figures 2 et 3, les éléments de friction 13A et 13B correspondent judicieusement au coulisseau 8A de la première liaison 8 et au palonnier 11A de la seconde liaison 11. Plus particulièrement, un flasque 11D est rapporté fixement et parallèlement à la plaque 11B, de sorte que le palonnier 11A se présente sous la forme d'une pince ou d'un étrier. Aussi, le coulisseau 8A est alors engagé dans l'espace prévu entre la plaque 11B et le flasque 11D du palonnier 11A.

Avantageusement, des garnitures de friction 13D sont alors fixées à la plaque 11B et au flasque 11D du palonnier, et elles s'appliquent ainsi directement contre les faces correspondantes 8D du coulisseau 8A. Ces garnitures de friction 13D se présentent sous la forme de disques, de même dimension, disposés coaxialement à l'axe z-z. A titre d'exemple, elles peuvent être réalisées en un polytétrafluoroéthylène, tandis que les faces opposées 8D du coulisseau sont revêtues d'une matière métallique durcie superficiellement, telle qu'un alliage léger revêtu d'oxyde.

En agissant sur les moyens de serrage 13C, qui seront décrits ci-après, le pilote ou le copilote règle la friction exercée par les garnitures 13D, fixées au flasque et à la plaque du palonnier 11A, respectivement contre les faces opposées 8D du coulisseau 8A. Aussi, comme les surfaces de friction des disques 13D du palonnier 11A sur les faces traitées 8D du coulisseau 8A sont symétriques et identiques, et que la pression exercée est constante, le déplacement angulaire du manche cyclique 6 dans l'un des plans ne crée aucun effort dans l'autre plan.

Dans cet exemple de réalisation, les moyens de serrage 13C desdits moyens de friction comprennent une tige filetée 13E, traversant le palonnier et dont l'axe définit l'axe de pivotement z-z du palonnier, et un bouton de réglage 13F monté sur le filetage de la tige 13E. Plus particulièrement, la tige traverse un perçage 11E prévu dans la plaque 11B et dans le flasque 11D du palonnier 11A, ainsi que le trou oblong 8B longitudinal du coulisseau 8A. La tête 13G de la tige s'applique contre un prolongement axial 11F de la plaque 11B et elle est solidarisée en rotation sur ce prolongement 11F par un ergot 13I, tandis que le bouton de réglage 13F s'applique, par l'intermédiaire d'une entretoise 13H, contre le flasque 11D.

On voit donc que les moyens de friction 13 sont alors proches de l'arbre 7 et de la bielle 10, et donc du manche cyclique 6, ce qui implique que le bouton de réglage 13F est aisément accessible aussi bien pour le pilote que pour le copilote.

On remarque ainsi, qu'en manoeuvrant uniquement ce bouton 13F en rotation, le pilote augmente ou diminue, selon ses souhaits, le coefficient de frottement des garnitures de friction 13D, solidaires de la pince, sur les faces traitées 8D du coulisseau, et par conséquent, les déplacements relatifs entre les deux liaisons 8 et 11 selon les déplacements angulaires D et D1 du manche cyclique. En effet, le palonnier 11A peut librement pivoter autour de l'axe z-z par rapport à la tige 13E, en frottant contre le coulisseau 8A, sous l'action d'une translation de la bielle 10 suite à un déplacement angulaire D1 du manche 6, la rotation du palonnier provoquant, par les bielles et les mécanismes 11C et les organes 12, le basculement du plateau cyclique 3 autour de l'axe 3B. De même, le coulisseau 8A peut être tiré ou poussé longitudinalement entre les deux positions extrêmes imposées par les bords circulaires 8B1 du trou oblong, en frottant contre les garnitures du palonnier 11A, sous l'action d'une rotation de l'arbre 7 suite à un déplacement angulaire D du manche 6. Le coulisseau 8 entraîne, par les bielles et les mécanismes 8C et l'organe de manoeuvre 9, le basculement correspondant du plateau cyclique 3 autour de l'axe 3A.

On a représenté sur les figures 1 à 3, le manche cyclique 6 en position neutre, c'est-à-dire que le plateau cyclique 3 est dans le plan xOy du repère lié à l'hélicoptère. De la sorte, la position du trou oblong 8B par rapport à la tige 13E est telle que cette dernière, liée à la structure de l'hélicoptère, se trouve au milieu dudit trou oblong 8B.

Les moyens de serrage 13C, assurant le réglage de la friction entre le palonnier 11A et le coulisseau 8A, sont associés à la structure 2A de l'hélicoptère, tout en étant susceptibles de coulisser, selon l'axe z-z, par rapport à la structure, entre deux positions extrêmes haute et basse qui sont fonction de la position occupée par le manche cyclique 6 dans son premier plan de déplacement longitudinal xOz.

Pour cela, en se référant à la figure 3, l'entretoise 13H et le prolongement axial en saillie 11F du palonnier sont montés dans des paliers respectivement 24 et 25, coaxiaux à l'axe z-z et fixés à des éléments 2B de la structure 2A. Ce montage permet ainsi à l'ensemble constitué des moyens de serrage 13C, du coulisseau 8A et du palonnier 11A, c'est-à-dire des moyens de friction 13, de pouvoir coulisser suivant cet axe z-z entre les deux positions extrêmes, sur une course C.

Fonctionnellement, cette faculté de coulissement dudit ensemble est rendue nécessaire du fait que le coulisseau 8A est articulé à l'arbre rotatif 7 par le maneton 16 décalé parallèlement de l'arbre. Par conséquent, en fonction du déplacement angulaire D du manche cyclique dans le premier plan longitudinal xOz et de la rotation de l'arbre 7 qui s'ensuit, le maneton 16 décrit une trajectoire circulaire T ce qui provoque, par rapport au point haut (figures 2 et 3) qu'il occupe lorsque le manche cyclique 6 est en position neutre, le déplacement vers l'avant ou vers l'arrière du coulisseau 8A, grâce à la présence du trou oblong 8B, et, de façon simultanée, l'abaissement de l'ensemble de sa position haute vers sa position basse, coulissant dans les paliers 24,25.

En conséquence, lorsque le manche 6 est en position neutre, le palonnier 11A s'applique par le flasque 11D contre le palier 24, la course maximale C étant comprise alors entre une plaquette 11H, solidaire et parallèle à la plaque 11B du palonnier, et le palier 25. L'ensemble occupe la position haute.

En revanche, lorsque le manche 6 est déplacé angulairement en D, par exemple vers l'avant, le maneton 16 décrit une trajectoire circulaire T tirant le coulisseau 8A, jusqu'à ce que le bord circulaire arrière 8B1 du trou oblong 8B vienne au contact de la tige 13E et, de façon concomittante, l'ensemble coulisse vers la position basse, non représentée, pour laquelle la plaquette 11H du palonnier 11A est en appui contre le palier 25. Le maneton occupe alors un point bas, la distance séparant le point haut du point bas correspondant à la course C.

Durant ces déplacements angulaires D et D1 combinés du manche cyclique 6 par le pilote, qui se traduisent par des pivotements du plateau cyclique autour des axes 3A et 3B, la mesure des efforts au manche sur le dispositif a montré que, grâce à ces moyens de friction uniques, la résultante des efforts résistants était sensiblement rapportée à la poignée du manche dans la direction de déplacement de ce dernier.

Par ailleurs, comme le dispositif 1, à l'exception du manche cyclique 6 et du bouton de réglage 13F des moyens de friction, est situé au-dessous du plancher de l'hélicoptère, sa protection, vis-à-vis des salissures et autres poussières, est maximale.

On doit également noter que le réglage de la friction entre les deux chaînes cinématiques ou les deux liaisons peut être réalisé automatiquement au moyen d'un organe moteur, associé au bouton de serrage 13F et non représenté. Le pilote peut ainsi, à partir d'un bouton de commande spécifique prévu sur la poignée du manche, régler instantanément la friction entre le palonnier et le coulisseau, et l'adapter à la valeur optimale en fonction de la phase de vol en cours.

En outre, l'effort à fournir par le pilote dans le premier plan longitudinal et l'effort à fournir dans le second plan latéral peuvent être réglés aisément pour obtenir un rapport ergonomique approprié. Pour cela, on peut modifier par exemple le bras de levier entre les articulations reliant le manche à l'arbre et celle reliant le coulisseau à l'arbre, ou encore le diamètre des disques de friction.

## Revendications

1. Dispositif pour le réglage des efforts de manoeuvre d'organes mobiles d'aéronef, du type comportant :
- au moins un manche de commande pivotant (6) ;
- un arbre (7) articulé audit manche et pouvant pivoter autour de son axe sous l'action d'un déplacement angulaire du manche (6) dans un premier plan ;
- une première liaison (8) prévue entre ledit arbre et au moins un premier organe mobile (9), et entraînant le déplacement de ce dernier ;
- une bielle (10) articulée audit manche et pouvant être déplacée en translation parallèle à son axe longitudinal sous l'action d'un déplacement angulaire du manche (6) dans un second plan ;
- une seconde liaison (11) prévue entre ladite bielle et au moins un second organe mobile (12), et entraînant le déplacement de ce dernier ; et
- des moyens de friction (13) pour doser les déplacements angulaires du manche dans les deux plans et assurer un freinage réglable des déplacements angulaires du manche sous les efforts en provenance des premier et second organes mobiles (9,12),
caractérisé en ce que lesdits moyens de friction (13) sont agencés entre lesdites première et seconde liaisons (8,11) et comprennent au moins deux éléments de friction (13A,13B), associés respectivement à la première et à la seconde liaisons, et des moyens de serrage réglables (13C) appliquant les deux éléments de friction l'un contre l'autre.

2. Dispositif selon la revendication 1,
caractérisé en ce que lesdits éléments de friction (13A,13B) associés respectivement à la première et à la seconde liaisons (8,11) sont proches dudit arbre et de ladite bielle auxquels le manche pivotant (6) est articulé.

3. Dispositif selon l'une des revendications 1 ou 2,
caractérisé en ce que l'un (13B) des éléments de friction est pourvu d'une garniture de friction (13D), tandis que l'autre élément de friction (13A) est revêtu d'une matière ayant une dureté superficielle élevée, les moyens de serrage (13C) autorisant le réglage de la pression entre ladite garniture et ladite matière.

4. Dispositif selon la revendication 3,
caractérisé en ce que ladite garniture de friction (13D) est réalisée en un polytétrafluoroéthylène et elle se présente sous la forme d'un disque rapporté audit élément.

5. Dispositif selon la revendication 3,
caractérisé en ce que ladite matière revêtant l'élément de friction correspondant est réalisée en une matière métallique, telle qu'un alliage léger avec oxydation anodique dure.

6. Dispositif selon l'une des revendications précédentes 1 à 5,
caractérisé en ce que l'un des éléments de friction (13B) se présente sous la forme d'une pince, dans laquelle est engagé l'autre élément de friction (13A).

7. Dispositif selon l'une quelconque des revendications précédentes 1 à 6,
caractérisé en ce que lesdits moyens de serrage (13C) comprennent une tige filetée (13E), traversant perpendiculairement les éléments de friction (13A,13B) associés aux première et seconde liaisons (8,11), et un bouton de serrage (13F), monté sur la tige et autorisant le réglage de la friction entre lesdits éléments.

8. Dispositif selon l'une quelconque des revendications précédentes 1 à 7,
caractérisé en ce que des moyens moteurs sont couplés auxdits moyens de serrage (13C), permettant le réglage de la pression entre les deux éléments par une commande indépendante et à distance.

9. Dispositif selon l'une quelconque des revendications précédentes, du type dans lequel, par rapport aux axes de roulis 0x, de tangage 0y et de lacet 0z dudit aéronef :
- ledit manche (6) peut pivoter, autour d'un centre de pivot, dans un premier plan longitudinal x0z et dans un second plan latéral y0z ;
- ledit arbre rotatif (7) est disposé selon l'axe 0y ;
- la première liaison (8) comporte une barre (8C) articulée sur l'arbre rotatif parallèlement à ce dernier et susceptible, sous l'action d'un déplacement angulaire du manche dans ledit premier plan, de se déplacer longitudinalement ; et
- la seconde liaison (11) comporte un palonnier (11A) articulé à ladite bielle (10) et susceptible, sous l'action du déplacement angulaire du manche dans ledit second plan, de pivoter dans son plan autour d'un axe z-z parallèle à l'axe 0z,
caractérisé en ce qu'on prévoit un coulisseau (8A) sur la première liaison entre ledit arbre (7) et ladite barre (8C) et en ce que lesdits éléments de friction (13A,13B) correspondent respectivement audit coulisseau (8A) et audit palonnier (11A) desdites première et seconde liaisons, lesdits moyens de serrage (13C) traversant perpendiculairement suivant l'axe z-z ledit coulisseau et ledit palonnier en les pressant l'un contre l'autre.

10. Dispositif selon la revendication 9,
caractérisé en ce que ladite tige (13E) desdits moyens de serrage s'engage d'une part, dans un perçage (11E) prévu dans ledit palonnier (11A) et, d'autre part, dans un trou oblong (8B) prévu longitudinalement dans ledit coulisseau (8A).

11. Dispositif selon l'une des revendications 9 ou 10,
caractérisé en ce que ledit palonnier (11A) présente une forme de pince, entre les faces opposées de laquelle est agencé ledit coulisseau (8A).

12. Dispositif selon l'une des revendications 9 à 11,
caractérisé en ce que lesdits moyens de serrage (13C), associant l'un à l'autre le coulisseau et le palonnier, sont montés coulissant le long de l'axe z-z dans des paliers (24,25) liés à la structure (2A) dudit aéronef, l'ensemble, formé par les moyens de friction (13) et constitué par les moyens de serrage (13C), le palonnier (11A) et le coulisseau (8A), étant susceptible de coulisser axialement entre une position haute, pour laquelle le manche (6) est dans une position neutre au moins dans le premier plan x0z, et une position basse pour laquelle le déplacement angulaire du manche dans ledit premier plan est maximal.

## Claims

1. Device for the adjustment of the manoeuvre forces of movable members of an aircraft, of the type comprising:
- at least one pivoting control column (6);
- a shaft (7) articulated to said column and able to pivot around its axis under the action of an angular displacement of the column (6) in a first plane;
- a first link (8) provided between said shaft and at least one first movable member (9), and giving rise to the displacement of the latter;
- a connecting rod (10) articulated to said column and able to be displaced in translation parallel to its longitudinal axis under the action of an angular displacement of the column (6) in a second plane;
- a second link (11) provided between said connecting rod and at least one second movable member (12), and giving rise to the displacement of the latter; and
- friction means (13) in order to apply the correct angular displacements to the column in the two planes and provide adjustable braking of the angular displacements of the column under the forces coming from the first and second movable members (9,12), characterized in that said friction means (13) are arranged between said first and second links (8,11) and comprise at least two friction elements (13A,13B), associated respectively with the first and second links, and adjustable clamping means (13C) applying the two friction elements against one another.

2. Device according to Claim 1, characterized in that said friction elements (13A,13B) associated respectively with the first and second links (8,11) are close to said shaft and to said connecting rod to which the pivoting column (6) is articulated.

3. Device according to one of Claims 1 or 2, characterized in that one (13B) of the friction elements is provided with a friction fitting (13D) while the other friction element (13A) is coated with a material having a high surface hardness, the clamping means (13C) allowing the adjustment of the pressure between said fitting and said material.

4. Device according to Claim 3, characterized in that said friction fitting (13D) is produced in polytetrafluoroethylene and exhibits the shape of a disc applied to said element.

5. Device according to Claim 3, characterized in that said material coating the corresponding friction element is produced in a metal material, such as a light alloy with hard anode oxidation.

6. Device according to one of the preceding Claims 1 to 5, characterized in that one of the friction elements (13B) exhibits the shape of a clip, into which is engaged the other friction element (13A).

7. Device according to any one of the preceding Claims 1 to 6, characterized in that said clamping means (13C) comprise a threaded stem (13E), passing perpendicularly through the friction elements (13A,13B) associated with the first and second links (8,11), and a clamping knob (13F) mounted on the stem and allowing the adjustment of the friction between said elements.

8. Device according to any one of the preceding Claims 1 to 7, characterized in that motor means are coupled to said clamping means (13C), permitting adjustment of the pressure between the two elements via an independent, remote control.

9. Device according to any one of the preceding claims, of the type in which, with respect to the roll 0x, pitch 0y and yaw 0z axes of said aircraft:
- said column (6) can pivot, around a pivot centre, in a first longitudinal plane x0z and in a second lateral plane y0z;
- said rotating shaft (7) is arranged along the axis 0y;
- the first link (8) comprises a bar (8C) articulated onto the rotating shaft parallel to the latter and able, under the action of an angular displacement of the column in said first plane, to be displaced longitudinally; and
- the second link (11) comprises a swing bar (11A) articulated to said connecting rod (10) and able, under the action of the angular displacement of the column in said second plane, to pivot in its plane around an axis z-z which is parallel to the axis 0z, characterized in that a slide (8A) is provided on the first link between said shaft (7) and said bar (8C) and in that said friction elements (13A,13B) correspond respectively to said slide (8A) and said swing bar (11A) of said first and second links, said clamping means (13C) passing perpendicularly along the axis z-z through said slide and said swing bar while pressing them against one another.

10. Device according to Claim 9, characterized in that said stem (13E) of said clamping means is engaged, on the one hand, in a piercing (11E) provided in said swing bar (11A) and, on the other hand, in an oblong hole (8B) provided longitudinally in said slide (8A).

11. Device according to one of Claims 9 or 10, characterized in that said swing bar (11A) exhibits a clip shape, between the opposed faces of which is arranged said slide (8A).

12. Device according to one of Claims 9 to 11, characterized in that said clamping means (13C), associating the slide and the swing bar with one another, are mounted slidably along the axis z-z in bearings (24,25) linked to the structure (2A) of said aircraft, the assembly formed by the friction means (13) and constituted by the clamping means (13C), the swing bar (11A) and the slide (8A) being capable of sliding axially between a high position, in which the column (6) is in a neutral position at least in the first plane x0z, and a low position in which the angular displacement of the column in said first plane is maximum.

## Patentansprüche

1. Vorrichtung zur Einstellung der Betätigungskräfte beweglicher Organe eines Luftfahrzeugs, mit:
- mindestens einem schwenkbaren Steuerknüppel (6);
- einer an den Knüppel angelenkten Welle (7), die durch eine Winkelverschiebung von Knüppel (6) in einer ersten Ebene um ihre Achse schwenken kann;
- einer ersten Verbindung (8) zwischen der Welle und mindestens einem ersten beweglichen Organ (9), durch die die Verschiebung desselben bewirkt werden kann;
- einer am Knüppel angelenkten Stange (10), die durch eine Winkelverschiebung von Knüppel (6) in einer zweiten Ebene geradlinig parallel zu ihrer Längsachse verschoben werden kann;
- einer zweiten Verbindung (11) zwischen der Stange und mindestens einem zweiten beweglichen Organ (12) durch die dessen Verschiebung bewirkt wird, und
- Reibungsmitteln (13), durch die die Winkelverschiebungen des Knüppels in den beiden Ebenen dosiert und eine einstellbare Bremsung der Winkelverschiebungen des Knüppels durch die Kräfte aus dem ersten und zweiten beweglichen Organ (9,12) gewährleistet werden können, dadurch gekennzeichnet, daß die Reibungsmittel (13) zwischen der ersten und zweiten Verbindung (8,11) angeordnet sind und mindestens zwei Reibungselemente (13A,13B), die jeweils der ersten und der zweiten Verbindung zugeordnet sind, sowie einstellbare Anstellmittel (13C) haben, durch die die beiden Reibungselemente aneinander gedrückt werden.

2. Vorrichtung nach Anspruch 1,
dadurch gekennzeichnet, daß die mit der ersten und mit der zweiten Verbindung (8,11) verbundenen Reibungselemente (13A,13B) in der Nähe der Welle und der Stange liegen, an die der Schwenkknüppel (6) angelenkt ist.

3. Vorrichtung nach einem der Ansprüche 1 oder 2,
dadurch gekennzeichnet, daß eins (13B) der Reibungselemente einen Reibbelag (13D) hat, während das andere Reibungselement (13A) mit einem Werkstoff mit hoher Oberflächenhärte beschichtet ist, wobei durch die Anstellmittel (13C) die Einstellung des Drucks zwischen dem Belag und dem Werkstoff ermöglicht wird.

4. Vorrichtung nach Anspruch 3,
dadurch gekennzeichnet, daß der Reibbelag (13D) aus einem Polytetrafluorethylen besteht und die Form einer auf das Element aufgesetzten Scheibe hat.

5. Vorrichtung nach Anspruch 3,
dadurch gekennzeichnet, daß der Werkstoff zur Beschichtung des entsprechenden Reibungselements aus einem metallischen Werkstoff, wie einer Leichtmetallegierung mit einer harten anodischen Oxidation, besteht.

6. Vorrichtung nach einem der obigen Ansprüche 1 bis 5,
dadurch gekennzeichnet, daß eins der Reibungselemente (13B) die Form einer Zange hat, die zur Aufnahme des anderen Reibungselements (13A) dient.

7. Vorrichtung nach einem der obigen Ansprüche 1 bis 6,
dadurch gekennzeichnet, daß die Anstellmittel (13C) eine Gewindestange (13E), die senkrecht durch die Reibungselemente (13A,13B) verläuft, die der ersten und zweiten Verbindung (8,11) zugeordnet sind, und einen Anstellknopf (13F) haben, der an der Stange angebracht ist und die Einstellung der Reibung zwischen den Elementen ermöglicht.

8. Vorrichtung nach einem der obigen Ansprüche 1 bis 7,
dadurch gekennzeichnet, daß mit den Anstellmitteln (13C) Antriebsmittel gekoppelt sind, durch die der Druck zwischen den beiden Elementen durch eine unabhängige Fernsteuerung eingestellt werden kann.

9. Vorrichtung nach einem der obigen Ansprüche derart, daß gegenüber der Rollachse 0x, der Nickachse 0y und der Gierachse 0z des Luftfahrzeugs:
- der Knüppel (6) um einen Drehmittelpunkt in einer ersten Längsebene x0z und in einer zweiten seitlichen Ebene y0z geschwenkt werden kann;
- die Drehwelle (7) nach der 0y-Achse angeordnet ist,
- die erste Verbindung (8) eine Stange (8C) hat, die an der Drehwelle parallel zu dieser angelenkt ist und die sich bei einer Winkelverschiebung des Knüppels in der ersten Ebene in Längsrichtung verschieben kann, und
- die zweite Verbindung (11) ein Pedal (11A) hat, das an der Stange (10) angelenkt ist und bei einer Winkelverschiebung des Knüppels in der zweiten Ebene in seiner Ebene um eine z-z-Achse parallel zur 0z-Achse schwenken kann,
dadurch gekennzeichnet, daß an der ersten Verbindung zwischen der Welle (7) und der Stange (8C) ein Gleitstück (8A) vorgesehen ist, und dadurch, daß die Reibungselemente (13A,13B) jeweils dem Gleitstück (8A) und dem Pedal (11A) der ersten und zweiten Verbindung entsprechen, wobei die Anstellmittel (13C) senkrecht entsprechend der z-z-Achse durch das Gleitstück und das Pedal verlaufen und diese aneinander drücken.

10. Vorrichtung nach Anspruch 9,
dadurch gekennzeichnet, daß die Stange (13E) der Anstellmittel einerseits in eine Bohrung (11E) in Pedal (11A) und andererseits in ein Langloch (8B) eingreift, das in Längsrichtung in Gleitstück (8A) vorgesehen ist.

11. Vorrichtung nach einem der Ansprüche 9 oder 10,
dadurch gekennzeichnet, daß das Pedal (11A) die Form einer Zange hat, zwischen deren gegenüberliegenden Seiten das Gleitstück (8A) angeordnet ist.

12. Vorrichtung nach einem der Ansprüche 9 bis 11,
dadurch gekennzeichnet, daß die Anstellmittel (13C), durch die das Gleitstück und das Pedal aneinandergedrückt werden, längs der z-z-Achse in Lagern (24,25) gleitend angeordnet sind, die mit der Struktur (2A) des Luftfahrzeugs verbunden sind, wobei die aus den Reibungsmitteln (13) gebildete und die Anstellmittel (13C), das Pedal (11A) und das Gleitstück (8A), darstellende Baugruppe axial zwischen einer oberen Stellung, bei der sich der Knüppel (6) in einer Neutralstellung mindestens in der ersten Ebene x0z befindet, und einer unteren Stellung gleiten kann, in der die Winkelverschiebung des Knüppels in der ersten Ebene maximal ist.
